# EUROPÄISCHE PATENTANMELDUNG

(11) **EP 1 453 230 A2**
(43) Veröffentlichungstag der Anmeldung: **01.09.2004**
(21) Anmeldenummer: 04000889.8
(22) Anmeldetag: 16.01.2004
(51) Int. Cl.: H04J 3/06

(54) **Synchronisation in einem schaltbaren Datennetz**

(30) Priorität: 28.02.2003 DE 10308952
(71) Anmelder: SIEMENS AKTIENGESELLSCHAFT, 80333 München (DE)
(72) Erfinder: Steindl, Günter, 92284 Poppenricht (DE)

(57) **Zusammenfassung**

Die Erfindung betrifft ein Synchronisationsverfahren für Teilnehmer (40-46) in einem schaltbaren Datennetz (70) sowie einen Teilnehmer (40-46) in einem schaltbaren Datennetz (70), insbesondere switched Ethernet. Um die Synchronisierung der Teilnehmer (40-46) in dem schaltbaren Datennetz (70) zu vereinfachen, wird vorgeschlagen, dass Telegramme mit Zeitdaten, mit einer ersten Information über die Qualität der Zeitdaten und mit einer zweiten Information über die Anzahl von weitergebenden Teilnehmern (40-46) von Teilnehmern (40-46) empfangen werden und derart ausgewertet werden, dass die Teilnehmer (40-46) abhängig von der ersten und der zweiten Information ein Telegramm auswählen, die Zeitdaten des ausgewählten Telegramms zur Synchronisation verwenden und das ausgewählte Telegramm an benachbarte Teilnehmer (40-46) weiterleiten.

## Beschreibung

Die Erfindung betrifft ein Synchronisationsverfahren für Teilnehmer in einem schaltbaren Datennetz sowie einen Teilnehmer in einem schaltbaren Datennetz, insbesondere switched Ethernet.

Datennetze ermöglichen die Kommunikation zwischen mehreren Teilnehmern durch die Vernetzung, also Verbindung der einzelnen Teilnehmer untereinander. Kommunikation bedeutet dabei die Übertragung von Daten zwischen den Teilnehmern. Die zu übertragenden Daten werden dabei als Datentelegramme verschickt, d. h. die Daten werden zu Paketen zusammengepackt und in dieser Form über das Datennetz an den entsprechenden Empfänger gesendet. Man spricht deshalb auch von Datenpaketen. Der Begriff "Übertragung von Daten" wird in diesem Dokument völlig synonym zur oben erwähnten Übertragung von Datentelegrammen oder Datenpaketen verwendet. Die Vernetzung selbst wird beispielsweise bei schaltbaren Hochleistungsdatennetzen, insbesondere Ethernet, dadurch gelöst, dass zwischen zwei Teilnehmer jeweils mindestens eine Koppeleinheit geschaltet ist, die mit beiden Teilnehmern verbunden ist. Jede Koppeleinheit kann mit mehr als zwei Teilnehmern verbunden sein. Jeder Teilnehmer ist mit mindestens einer Koppeleinheit, aber nicht direkt mit einem anderen Teilnehmer verbunden. Teilnehmer sind beispielsweise Computer, speicherprogrammierbare Steuerungen (SPS) oder weitere Komponenten, die elektronische Daten mit anderen Komponenten austauschen, insbesondere verarbeiten. Koppeleinheiten sind z. B. sogenannte Switches, Hubs, Bridges, Router u. Ä. Im Gegensatz zu Bussystemen, bei denen jeder Teilnehmer jeden anderen Teilnehmer des Datennetzes direkt über den Datenbus erreichen kann, handelt es sich bei den schaltbaren Datennetzen ausschließlich um Punkt-zu-Punkt-Verbindungen, d. h. ein Teilnehmer kann alle anderen Teilnehmer des schaltbaren Datennetzes nur durch Weiterleitung der zu übertragenden Daten mittels einer oder mehrerer Koppeleinheiten erreichen. Die Datenpakete in einem schaltbaren Datennetz werden auch Frames genannt, da die übertragenen Nutzdaten üblicherweise in einem Rahmen (englisch: Frame) eingekapselt sind, da spezielle Synchronisierungs- und Fehlererkennungs-Bits den Nutzdaten voran- bzw. nachgestellt sind und sie insofern einrahmen.

In verteilten Automatisierungssystemen, beispielsweise im Bereich der Antriebstechnik, müssen bestimmte Daten zu bestimmten Zeiten bei den dafür bestimmten Teilnehmern eintreffen und von den Empfängern verarbeitet werden. Man spricht dabei von echtzeitkritischen Daten bzw. Datenverkehr, da ein nicht rechtzeitiges Eintreffen der Daten am Bestimmungsort zu unerwünschten Resultaten beim Teilnehmer führt.

Von der Internet-Seite http://www.ntp-zeit.de/ ist ein Verfahren zur hierarchischen Zeitsynchronisierung von in einem Netzwerk zusammengeschalteten Rechnern bekannt. Dabei synchronisiert ein Programm die Zeit seines eigenen Rechners und dient als Client, Server oder Peer für entsprechende Programme auf anderen Rechnern im Netzwerk. Als Client holt es sich die Referenzzeit von einem oder mehreren Servern. Als Server stellt es seine eigene Zeit anderen Clients im Netzwerk zur Verfügung. Als Peer vergleicht das Programm seine eigene Zeit mit mehreren anderen Peers, die sich schließlich auf eine gemeinsame Zeit einigen, nach der sich alle richten. Mit Hilfe dieser Möglichkeiten wird eine hierarchische Zeitverteilung in einem Netzwerk eingerichtet. Auf der obersten Hierarchieebene befindet sich das Programm mit der genauesten Zeit, das normalerweise als Referenzzeit eine Funkuhr verwendet. Jedes Programm kann so konfiguriert werden, dass es mehrere unabhängige Referenzzeitquellen verwenden kann. Von allen möglichen Zeitquellen sucht es sich dann die beste aus. Kriterien für die Auswahl sind Erreichbarkeit, die Hierarchieebene (der sogenannte Stratum-Wert), sowie die Größenordnung der Antwortzeiten bei der Abfrage (Delay) und die Schwankungsbreite der Antwortzeiten (Jitter). Wenn die ausgewählte Referenzzeitquelle nicht mehr erreichbar sein sollte, wählt sich das Programm die nächstbeste Referenzzeitquelle aus. Wenn diese einen anderen Stratum-Wert besitzt als die vorherige Quelle, dann ändert sich beim Wechsel der Zeitquelle auch der Stratum-Wert des Programms selbst.

Der Erfindung liegt die Aufgabe zugrunde, die Synchronisierung von Teilnehmern in einem schaltbaren Datennetz zu vereinfachen.

Diese Aufgabe wird durch ein Synchronisationsverfahren für Teilnehmer in einem schaltbaren Datennetz gelöst, bei welchem Telegramme
- mit Zeitdaten,
- mit einer ersten Information über die Qualität der Zeitdaten und
- mit einer zweiten Information über die Anzahl von weitergebenden Teilnehmern
von Teilnehmern empfangen werden und derart ausgewertet werden, dass die Teilnehmer abhängig von der ersten und der zweiten Information ein Telegramm auswählen, die Zeitdaten des ausgewählten Telegramms zur Synchronisation verwenden und das ausgewählte Telegramm an benachbarte Teilnehmer weiterleiten.

Diese Aufgabe wird von einem Teilnehmer in einem schaltbaren Datennetz gelöst, welcher einen Synchronisationsclient und einen Synchronisationsserver aufweist, wobei
- der Synchronisationsclient zur Übertragung von Telegrammen
   - mit Zeitdaten,
   - mit einer ersten Information über die Qualität der Zeitdaten und
   - mit einer zweiten Information über die Anzahl von weitergebenden Teilnehmern
   an weitere Teilnehmer vorgesehen ist und
- der Synchronisationsserver zur Auswahl eines empfangenen Telegramms aufgrund einer Auswertung der ersten und der zweiten Information der empfangenen Telegramme und zur Synchronisation des Teilnehmers mit den Zeitdaten des ausgewählten Telegramms vorgesehen ist.

Die Erfindung basiert auf der Erkenntnis, dass bisher bekannte Synchronisationsverfahren für Teilnehmer in schaltbaren Datennetzen entweder zu aufwändig oder nicht genau genug sind. Zusätzlich erfordern sie üblicherweise eine Projektierung der Synchronisationsbeziehungen. Bei heute bereits verwendeten Verfahren ist zudem häufig die Genauigkeit abhängig vom Datenvolumen und der Anzahl der Netzkomponenten. Die hier vorgeschlagene Lösung ermöglicht hingegen eine projektierungsfreie Synchronisation aller Teilnehmer im Datennetz. Gemäß der Erfindung kann ein Verfahren realisiert werden, bei dem sich alle Teilnehmer lawinenartig synchronisieren. Da jeder Teilnehmer gleichzeitig Endpunkt und Startpunkt der Synchronisation ist, wird zur Steigerung der Synchronisationsqualität die Anzahl von weitergebenden Teilnehmern, d. h. die Anzahl von Teilnehmern im Kommunikationsweg zwischen einer Synchronisationsquelle und dem jeweiligen empfangenden Teilnehmer, welche das empfangene Telegramm mit Zeitdaten übermittelt haben, sowie die Qualität der Zeitdaten in den Telegrammen an die Teilnehmer weitergegeben, so dass ein Teilnehmer, welcher über Schnittstellen mit mehr als einem weiteren Teilnehmer verbunden ist, die jeweils beste Synchronisation wählen kann. Zusätzlich entscheidet jeder Teilnehmer anhand der ersten und der zweiten Information, ob er ein Telegramm mit Zeitdaten über eine Schnittstelle an einen weiteren Teilnehmer weiterleiten soll oder nicht. Die Erfindung ermöglicht die Verwendung mehrerer Synchronisationsquellen gleichzeitig. Jeder Teilnehmer erhält über die Informationen in den Telegrammen Kenntnis über die Qualität einer empfangenen Synchronisation. Da die Synchronisation jeweils zwischen zwei Teilnehmern des schaltbaren Datennetzes erfolgt, ist die Qualität der Synchronisation gemäß der Erfindung unabhängig von Netzlast und Anzahl der Teilnehmer im Datennetz. Die Erfindung ermöglicht somit eine sehr hohe Qualität der Synchronisation mit äußerst geringer Netzlast. Fällt eine Synchronisationsquelle aus, so bleiben die Teilnehmer des Datennetzes weiterhin synchronisiert, da jeder Teilnehmer seine benachbarten Teilnehmer mittels der Telegramme mit Zeitdaten weiterhin synchronisieren kann, wobei in diesem Fall die erste Information über die Qualität der Zeitdaten an die veränderte Situation angepasst werden würde. Mit der hier vorgeschlagenen Lösung können auch so genannte unmanaged Teilnehmer, d. h. nicht projektierte Teilnehmer im Datennetz, welche über keine Informationen über das Datennetz und ihre Umgebung verfügen, in einem schaltbaren Datennetz eingesetzt und synchronisiert werden.

Gemäß einer vorteilhaften Ausgestaltung der Erfindung ist die erste Information über die Qualität der Zeitdaten von einer Güte einer Synchronisationsquelle abhängig. Die Synchronisationsquelle stellt die Zeitdaten zur Verfügung, ist z. B. eine Referenzzeitquelle, deren Güte in Form eines zugeordneten Stratum-Werts festgelegt ist. Damit wird erreicht, dass Synchronisationsquellen höherer Güte mit höherer Wahrscheinlichkeit für die Synchronisierung von Teilnehmern verwendet werden und somit die Synchronisationsqualität der Teilnehmer im Datennetz verbessert wird.

Nachfolgend wird die Erfindung anhand der in den Figuren dargestellten Ausführungsbeispiele näher beschrieben und erläutert.

Es zeigen:
- FIG 1: verschiedene Teilnehmer in einem schaltbaren Datennetz und
- FIG 2: eine prinzipielle Darstellung einer Synchronisierung von Teilnehmern in einem schaltbaren Datennetz.

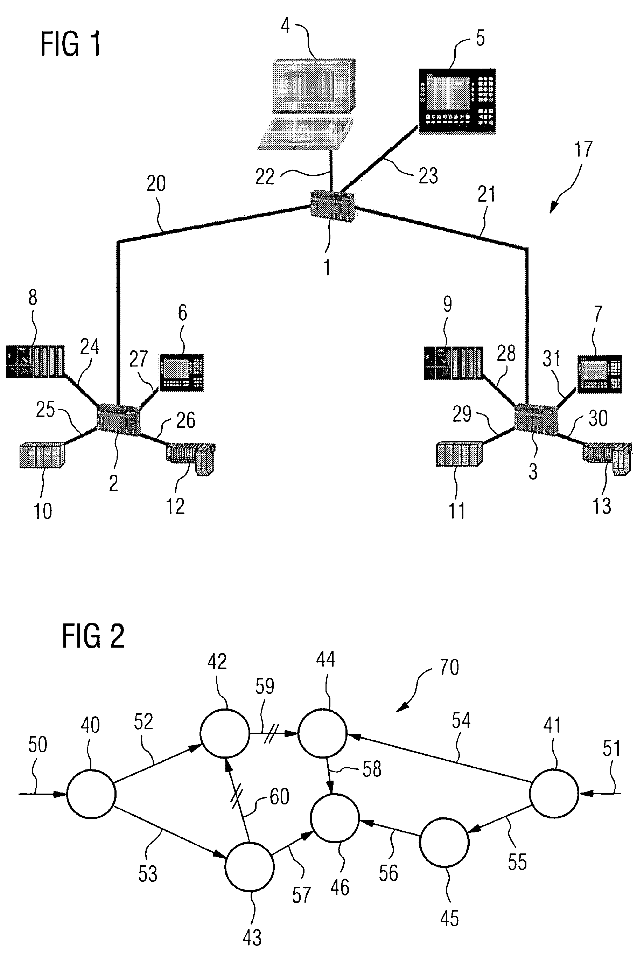

FIG 1 zeigt ein schaltbares Datennetz 17 mit Teilnehmern 1 bis 13. Die Teilnehmer 1 - 13 sind mit Punkt-zu-Punkt-Kommunikationsverbindungen 20 - 31 miteinander gekoppelt. Im in FIG 1 dargestellten Ausführungsbeispiel dient das schaltbare Datennetz 17, z. B. ein switched Ethernet-Netz, zur Kommunikation von Komponenten eines Automatisierungssystems. Die Teilnehmer 4 - 13 im Automatisierungssystem sind über schaltende Koppelelemente 1 - 3 zur Weiterleitung von über die Kommunikationsverbindungen 20 - 30 übertragenen Datenpaketen miteinander gekoppelt. Jeweils mit einer Punkt-zu-Punkt-Verbindung 20 - 30 an die schaltenden Koppelelemente 1 - 3 angebunden sind ein mobiles Programmiergerät 4, ein zentrales Bedien- und Beobachtungssystem 5, dezentrale Bedien- und Beobachtungsstationen 6, 7, speicherprogrammierbare Steuerungen 8, 9, Ein-/Ausgabeeinheiten 10, 11 sowie weitere Peripheriebaugruppen 12, 13. Die Kommunikation zwischen den Teilnehmern 4 - 13 im Automatisierungssystem erfolgt also nicht direkt, z. B. über ein so genanntes Shared-Medium-Netz, sondern im schaltbaren Datennetz 17 jeweils über ein oder mehrere geschaltete Koppelelemente 1 - 3. Die vom Automatisierungssystem zu lösenden komplexen Aufgaben, teilweise mit hohen Anforderungen an die Echtzeitfähigkeit des Systems, verlangen eine Synchronisierung der Teilnehmer 1 - 13 im Automatisierungssystem. Insbesondere seit der Einführung von geschaltetem Ethernet (= switched Ethernet) in der Automatisierungstechnik sind für Automatisierungskomponenten geeignete Synchronisationsverfahren in schaltbaren Datennetzen erforderlich. Bisher bekannte Verfahren (z. B. sntp, ntp, etc.) sind üblicherweise für Automatisierungskomponenten entweder zu aufwändig oder nicht genau genug. Zusätzlich erfordern sie meist eine Projektierung der Synchronisationsbeziehungen der Teilnehmer.

FIG 2 verdeutlicht das Prinzip der Synchronisierung gemäß der Erfindung an einem weiteren Ausführungsbeispiel. In FIG 2 stark vereinfacht dargestellt ist ein schaltbares Datennetz 70 mit Teilnehmern 40 - 46. Die die Teilnehmer 40 - 46 verbindenden Richtungspfeile 50 - 60 symbolisieren die Weitergabe von Synchronisationsinformationen zwischen den Teilnehmern 40 - 46. Die Weitergabe der Synchronisationsinformationen 50 - 60 erfolgt dabei mit Telegrammen, welche Zeitdaten, eine erste Information über die Qualität der Zeitdaten und eine zweite Information über die Anzahl von weitergebenden Teilnehmern enthalten. Im Ausführungsbeispiel der Erfindung wird eine projektierungsfreie Synchronisation aller Teilnehmer durch die Adaption der Funktionsweise des im Ethernet-Standard IEEE 802.3, Annex 43b definierten "Slow Protocols" ermöglicht. Das standardisierte "Slow Protocol" ist dabei so definiert, dass ein Teilnehmer, z. B. eine Schnittstelle oder ein Knoten in einem Datennetz, der ein gemäß diesem Protokoll aufgebautes Telegramm empfängt, dieses nicht direkt weiterleitet, sondern an seine lokale Schnittstelle übergibt. Mit Hilfe dieses Protokolls kann ein Verfahren realisiert werden, bei welchem sich alle Teilnehmer im Datennetz lawinenartig synchronisieren. Im in FIG 2 gezeigten Ausführungsbeispiel der Erfindung erfolgt die Synchronisierung der Teilnehmer 40 - 46 im Datennetz 70 aufgrund von Synchronisierungsinformationen 50 und 51, welche von Synchronisationsquellen, z. B. Referenzzeitquellen, zur Verfügung gestellt werden und von den Teilnehmern 40 bzw. 41 empfangen werden. Die Synchronisierungsinformationen 50 und 51 werden in Form von Telegrammen weitergegeben, welche Zeitdaten, z. B. ein Zeitdatum einer Referenzzeitquelle, eine erste Information über die Qualität dieser Zeitdaten, z. B. ein dem Zeitdatum bzw. der Referenzzeitquelle zugeordneter so genannter Stratum-Wert, sowie eine zweite Information über die Anzahl von weitergebenden Teilnehmern, in diesem Fall der Wert "0", enthalten. Die von den Teilnehmern 40 und 41 empfangenen Telegramme 50 bzw. 51 werden in den Teilnehmern 40 und 41 derart ausgewertet, dass die Teilnehmer 40 und 41 abhängig von der ersten und der zweiten Information das Telegramm auswählen, die Zeitdaten des ausgewählten Telegramms zur Synchronisation verwenden und das ausgewählte Telegramm an benachbarte Teilnehmer 42 und 43 bzw. 44 und 45 weiterleiten. In den jeweils weitergeleiteten Telegrammen mit Zeitdaten wird die erste Information über die Zeitdaten und die zweite Information über die Anzahl von weitergebenden Teilnehmern angepasst, in diesem Fall wird also jeweils die Anzahl von weitergebenden Teilnehmern auf den Wert "1" heraufgesetzt sowie in der ersten Information über die Qualität der Zeitdaten eine durch die Weitergabe verringerte Qualität der Zeitdaten festgehalten. Die diese Synchronisierungsinformationen enthaltenden Telegramme empfangenen Teilnehmern 43 - 45 werten die Telegramme entsprechend aus, synchronisieren sich, passen die ersten und zweiten Informationen in den Telegrammen an und geben die Zeitdaten ihrerseits an benachbarte Teilnehmer weiter. Im Beispielsfall erhält der Teilnehmer 46 jeweils von den Teilnehmern 43 - 45 ein Telegramm mit Synchronisierungsinformationen 57, 58 bzw. 56, deren Informationen er auswertet und von denen er vom Ergebnis der Auswertung abhängig ein Telegramm auswählt und zur eigenen Synchronisierung verwendet. In diesem Fall wäre die zweite Information über die Anzahl von weitergebenden Teilnehmern in den drei Telegrammen jeweils die gleiche (Wert "2"), es könnten sich jedoch Unterschiede zwischen den drei Telegrammen anhand der ersten Information über die Qualität der Zeitdaten ergeben. Da ein Teilnehmer 40 - 46 nicht weiß, ob ein benachbarter Teilnehmer bereits Synchronisierungsinformationen von anderen Teilnehmern empfangen hat, erhalten die vernetzten Teilnehmer 40 - 46 teilweise redundante Synchronisierungsinformationen, in FIG 2 angedeutet durch die durchgestrichenen Richtungspfeile 59 und 60. Die jeweiligen Teilnehmer 44 und 42 haben bereits Telegramme mit Synchronisierungsinformationen auf einem direkteren Weg empfangen, d. h. mit einer geringeren Anzahl von weitergebenden Teilnehmern, hier auf dem Weg zwischen der Synchronisierungsquelle und dem empfangenden Teilnehmer 42 bzw. 44.

Gemäß einem weiteren Ausführungsbeispiel der Erfindung wird ein geschaltetes Ethernet-Netzwerk zur Kommunikation in einem Automatisierungssystem genutzt. Zur Implementierung des erfindungsgemäßen Synchronisationsverfahrens werden so genannte Synchronisations-Clients bzw. -Server in Form von Firmware entwickelt. Jeder Teilnehmer, d. h. jeder Knoten im Ethernet-Netzwerk, in diesem Falle also Automatisierungskomponenten, Switches, usw. erhält diese Firmware. Auf Anstoß durch die Synchronisationsquelle geben alle Synchronisations-Clients nach der Synchronisation des jeweiligen Teilnehmers die Synchronisationsinformation in Form von Telegrammen mit Zeitdaten, einer ersten Information über die Qualität der Zeitdaten und einer zweiten Information über die Anzahl von weitergebenden Teilnehmern über ihre Schnittstellen an weitere Teilnehmer weiter. Die in den empfangenden Teilnehmern installierten Synchronisationsserver verifizieren jeweils die Qualitätsaussage der von den anderen Teilnehmern empfangenen Telegramme und wählen anhand der gegebenen ersten und zweiten Informationen die jeweils beste Synchronisierungsinformation für eine eigene Synchronisierung. Verfügt ein benachbarter Teilnehmer über schlechtere Synchronisierungsinformationen, so wechseln die Rollen der beiden Teilnehmer und der Teilnehmer, welcher über die bessere Synchronisierungsinformation verfügt, übernimmt die Synchronisation des Teilnehmers, welcher im Vergleich über die schlechtere Synchronisierungsinformation verfügt.

Zusammengefasst betrifft die Erfindung somit ein Synchronisationsverfahren für Teilnehmer 40 - 46 in einem schaltbaren Datennetz 70 sowie einen Teilnehmer 40 - 46 in einem schaltbaren Datennetz 70, insbesondere switched Ethernet. Um die Synchronisierung der Teilnehmer 40 - 46 in dem schaltbaren Datennetz 70 zu vereinfachen, wird vorgeschlagen, dass Telegramme mit Zeitdaten, mit einer ersten Information über die Qualität der Zeitdaten und mit einer zweiten Information über die Anzahl von weitergebenden Teilnehmern 40 - 46 von Teilnehmern 40 - 46 empfangen werden und derart ausgewertet werden, dass die Teilnehmer 40 - 46 abhängig von der ersten und der zweiten Information ein Telegramm auswählen, die Zeitdaten des ausgewählten Telegramms zur Synchronisation verwenden und das ausgewählte Telegramm an benachbarte Teilnehmer 40 - 46 weiterleiten.

## Patentansprüche

1. Synchronisationsverfahren für Teilnehmer (40-46) in einem schaltbaren Datennetz (70), bei welchem Telegramme
• mit Zeitdaten,
• mit einer ersten Information über die Qualität der Zeitdaten und
• mit einer zweiten Information über die Anzahl von weitergebenden Teilnehmern (40-46)
von Teilnehmern (40-46) empfangen werden und derart ausgewertet werden, dass die Teilnehmer (40-46) abhängig von der ersten und der zweiten Information ein Telegramm auswählen, die Zeitdaten des ausgewählten Telegramms zur Synchronisation verwenden und das ausgewählte Telegramm an benachbarte Teilnehmer (40-46) weiterleiten.

2. Synchronisationsverfahren nach Anspruch 1,
**dadurch gekennzeichnet,**
**dass** die erste Information von einer Güte einer Synchronisationsquelle abhängig ist, wobei die Synchronisationsquelle die Zeitdaten zur Verfügung stellt.

3. Teilnehmer (40-46) in einem schaltbaren Datennetz (70), welcher einen Synchronisationsclient und einen Synchronisationsserver aufweist, wobei
• der Synchronisationsclient zur Übertragung von Telegrammen
• mit Zeitdaten,
• mit einer ersten Information über die Qualität der Zeitdaten und
• mit einer zweiten Information über die Anzahl von weitergebenden Teilnehmern (40-46)
an weitere Teilnehmer (40-46) vorgesehen ist und
• der Synchronisationsserver zur Auswahl eines empfangenen Telegramms aufgrund einer Auswertung der ersten und der zweiten Information der empfangenen Telegramme und zur Synchronisation des Teilnehmers (40-46) mit den Zeitdaten des ausgewählten Telegramms vorgesehen ist.

4. Teilnehmer nach Anspruch 3,
**dadurch gekennzeichnet,**
**dass** die erste Information von einer Güte einer Synchronisationsquelle abhängig ist, wobei die Synchronisationsquelle die Zeitdaten zur Verfügung stellt.
